# EUROPÄISCHE PATENTANMELDUNG

(11) **EP 4 678 267 A1**
(43) Veröffentlichungstag der Anmeldung: **14.01.2026**
(21) Anmeldenummer: 24187311.6
(22) Anmeldetag: 09.07.2024
(51) Int. Cl.: B01D 46/00, B01D 46/42, B01D 46/71, F16K 1/00

(54) **SYSTEM ZUR ÜBERWACHUNG VON VERSCHLEISSTEILEN IN EINEM DRUCKBEHÄLTER**

(71) Anmelder: Bauer Kompressoren GmbH, 81477 München (DE)
(72) Erfinder: DEIXLER-THIER, Bettina, 81477 München (DE); MAIER, Konstantin, 81477 München (DE)
(74) Vertreter: Weickmann & Weickmann PartmbB

(57) **Zusammenfassung**

Die vorliegende Erfindung betrifft ein 1. System (10) zur Überwachung von Verschleißteilen (104) in einem Druckbehälter (102), umfassend eine einem Verschleißteil (104) zuordenbare Speichereinheit (12), eine außerhalb des Druckbehälters (102) angeordnete Steuereinheit (14), welche dazu eingerichtet ist, Daten von der Speichereinheit (12) auszulesen und ggf. Daten auf die Speichereinheit (12) zu schreiben, eine innerhalb des Druckbehälters (102) angeordnete Kommunikationseinheit (16), welche dazu eingerichtet ist, eine Kommunikations-verbindung mit der Speichereinheit (12) herzustellen, und eine druckfeste Signaldurchführung (18), welche dazu eingerichtet ist, eine Signalverbindung zwischen der Steuereinheit (14) und der Kommunikationseinheit (16) durch den Druckbehälter (102) hindurch herzustellen. Ferner betrifft die Erfindung eine Anlage (100) zur Verarbeitung eines unter Druck stehenden Gases, welche ein derartiges System (10) umfasst, sowie ein Verfahren zum Betreiben eines solchen Systems.

## Beschreibung

Die vorliegende Erfindung betrifft ein System zur Überwachung von Verschleißteilen in einem Druckbehälter, eine Anlage zur Verarbeitung eines unter Druck stehenden Gases, welche wenigstens ein derartiges System umfasst, sowie ein Verfahren zum Betreiben eines derartigen Systems.

Es ist bekannt, dass in bestimmten Typen von Anlagen zur Verarbeitung von unter Druck stehenden Gasen Verschleißteile eingesetzt werden, wie beispielsweise Trockner- oder Filterpatronen, welche eine maximale bauartbedingte betriebsmäßige Lebensdauer aufweisen und zu gegebener Zeit getauscht werden müssen, um die beabsichtigte Funktionsweise der Anlage garantieren zu können. Da es sich ferner bei derartigen Verschleißteilen um essenzielle Komponenten der entsprechenden Anlagen handelt, ist ferner sicherzustellen, dass ausschließlich geeignete Typen derartiger Verschleißteile zum Einsatz kommen können und ein Betrieb der Anlage mit einem nicht zugelassenen oder geeigneten Typ eines derartigen Verschleißteils oder gar vollständig ohne das Verschleißteil nicht möglich ist.

Wenn nun ein derartiges Verschleißteil, wie beispielsweise die bereits angesprochene Trockner- oder Filterpatrone, innerhalb eines Druckbehälters zum Einsatz kommt, so ist die Überwachung des entsprechenden Verschleißteils dadurch erschwert, dass üblicherweise keine Datenverbindung oder ähnliches von einer an der Außenseite des Druckbehälters vorgesehenen Steuervorrichtung der Anlage in den Druckbehälter hinein vorgesehen ist, weshalb beispielsweise in der EP 1 479 012 A1 ein Betriebsüberwachungsgerät für Kompressoren oder ähnliche Arbeitsmaschinen vorgeschlagen worden ist, in welchen ein Zustand einer von unter Druck stehendem Gas durchströmten Filterpatrone indirekt über einen Temperatursensor und eine nachfolgende Auswertung der entsprechend aufgenommenen Daten ermittelt wird.

Hierbei zeigt sich jedoch, dass das entsprechende Betriebsüberwachungsgerät relativ aufwendig ist und lediglich mittels Temperaturprofilen ableitbare Parameter eines entsprechenden Verschleißteils, in diesem Fall der Filterpatrone, ermittelt werden können, wodurch es der dort vorgeschlagenen Anlage an Flexibilität und erwünschten Funktionalitäten mangelt.

Dementsprechend ist es die Aufgabe der vorliegenden Erfindung, die Überwachung von Verschleißteilen in einem Druckbehälter in einer flexibleren und umfangreicheren Weise zu ermöglichen, wodurch ein korrekter Betrieb einer mit einem derartigen System ausgestatteten Anlage zuverlässig sichergestellt werden kann.

Zur Lösung dieser Aufgabe und zum Ausräumen der oben genannten Nachteile des Stands der Technik wird erfindungsgemäß zunächst ein System zur Überwachung von Verschleißteilen in einem Druckbehälter vorgeschlagen, umfassend eine einem Verschleißteil zuordenbare Speichereinheit, eine außerhalb des Druckbehälters angeordnete Steuereinheit, welche dazu eingerichtet ist, Daten von der Speichereinheit auszulesen und gegebenenfalls auf die Speichereinheit zu schreiben, eine innerhalb des Druckbehälters angeordnete Kommunikationseinheit, welche dazu eingerichtet ist, eine Kommunikationsverbindung mit der Speichereinheit herzustellen, und eine druckfeste Signaldurchführung, welche dazu eingerichtet ist, eine Signalverbindung zwischen der Steuereinheit und der Kommunikationseinheit durch den Druckbehälter hindurch herzustellen.

Demzufolge wird durch das System gemäß der vorliegenden Erfindung ermöglicht, unmittelbar auf einer dem entsprechenden Verschleißteil zugeordneten Speichereinheit abgelegte Daten über das Verschleißteil auszulesen und gegebenenfalls ferner ebenfalls darauf zu schreiben, sodass unmittelbar auf vorbestimmte, dem Verschleißteil zugeordnete Daten zurückgegriffen werden kann, welche die Eignung des Verschleißteils repräsentieren, einen vorgesehenen Betrieb der übergeordneten Anlage sicherstellen zu können.

Insbesondere kann es sich bei der Speichereinheit hierbei um ein RFID-Tag handeln und demzufolge bei der Kommunikationseinheit um eine RFID-Antenne, insbesondere um eine RFID-HF-Antenne, welche vorzugsweise durch Leiterbahnen auf einer Platine gebildet sein kann. Eine derartige Kombination aus einem RFID-Tag und einer RFID-Antenne zeichnet sich dadurch aus, dass die entsprechenden Komponenten wenig anfällig für Umgebungsbedingungen sind, was sie für den hier bestimmten Einsatzzweck einer Verwendung in einem Druckbehälter besonders geeignet macht. Ferner zeichnen sich RFID-Tags dadurch aus, dass sie bei geringen Anschaffungskosten geeignet große Datenmengen zuverlässig und nachhaltig speichern können und mit geringem Energieaufwand beschreibbar und auslesbar sind.

Alternativ wären jedoch selbstverständlich auch andere kabellose oder kabelgebundene Varianten beziehungsweise Kombinationen von Speichermedien und Kommunikationseinheiten denkbar, wobei jedoch insbesondere im angesprochenen Beispiel einer RFID-Antenne diese in geeigneter Weise beschichtet sein kann, um sie noch unempfindlicher gegenüber den in dem Druckbehälter herrschenden Verhältnissen zu machen, wobei in einer solchen Ausführungsform die an der Antenne durch die Beschichtung auftretenden Änderungen ihrer Eigenschaften in geeigneter Weise durch eine angepasste Ansteuerung der Kommunikationseinheit durch die Steuereinheit ausgeglichen werden können.

Weiterhin kann denkbar sein, dass die Steuereinheit des erfindungsgemäßen Systems mit einer zentralen Steuereinheit einer übergeordneten Anlage betriebsmäßig gekoppelt oder integriert ist, sodass eine unmittelbare Integration des erfindungsgemäßen Systems in die übergeordnete Anlage ermöglicht wird. Hierbei kann unter anderem daran gedacht werden, dass beim Auslesen der Speichereinheit erfasste Daten über das Verschleißteil unmittelbar der zentralen Steuereinheit der übergeordneten Anlage zur Verfügung gestellt werden, sodass diese entsprechend Anpassungen an der Betriebsweise der Anlage auf Grundlage der gelieferten Daten vornehmen kann.

Ferner kann mittels der Kopplung oder Integration der Steuereinheit des Systems mit der zentralen Steuereinheit der übergeordneten Anlage oder gegebenenfalls auch unmittelbar durch die Steuereinheit des Systems eine Kopplung an externe Instanzen hergestellt sein, beispielsweise an einen Cloudserver. Auf diese Weise können über das Verschleißteil durch Auslesen der Speichereinheit ermittelte Daten mit auf einer Cloud hinterlegten Daten vergleichen oder die Daten selbst dort abgelegt und gesondert auf sie zugegriffen werden, und es ist ebenfalls denkbar, beispielsweise für eine Verifikation des entsprechenden Verschleißteils auf in einer Cloud abgelegte Daten über die entsprechende Datenverbindung zurückzugreifen.

Wie bereits weiter oben angedeutet, kann das System ferner eine als das Verschleißteil wirkende Patrone, insbesondere eine Trockner- oder Filterpatrone, umfassen, welche dazu vorgesehen ist, in ihrem Betrieb in dem Druckbehälter aufgenommen zu sein. Derartige Trockner- oder Filterpatronen zeichnen sich dadurch aus, dass sie nach einer gewissen Betriebszeit gesättigt sind und demzufolge ihre vorgesehene Aufgabe nicht mehr im geeigneten Rahmen erfüllen können. Dementsprechend ist ein regelmäßiger Austausch derartiger Patronen notwendig und es ist ferner sicherzustellen, dass in der übergeordneten Anlage stets ein geeigneter Patronentyp eingesetzt wird.

Dementsprechend kann durch das erfindungsgemäße System unter anderem anhand von auf der Speichereinheit hinterlegten Daten der Typ einer solchen Patrone ermittelt und mit vorgegebenen erlaubten Patronentypen verglichen werden, während andererseits ebenfalls denkbar ist, eine akkumulierte Betriebszeit einer derartigen Patrone durch die Steuereinheit zu ermitteln und zu gegebener Zeit auf die Speichereinheit zu schreiben, um sicherzustellen, dass die vorgesehene Betriebsdauer der Patrone beispielsweise auch dann nicht überschritten wird, wenn die übergeordnete Anlage zeitweilig außer Betrieb genommen wird und nach ihrem Neustart die Patrone weiterhin verwendet wird, oder die Patrone während ihrer Lebensdauer in unterschiedlichen Anlagen zum Einsatz kommt. Ferner kann auf diese Weise ausgeschlossen werden, dass beispielsweise versehentlich eine bereits erschöpfte Patrone erneut in eine entsprechende Anlage eingesetzt und die Anlage anschließend in Betrieb genommen wird, wenn auf der Speichereinheit der Patrone ihre bereits geleistete Betriebszeit hinterlegt worden ist.

Dementsprechend können die auf der Speichereinheit gespeicherten Daten wenigstens eines umfassen aus für das Verschleißteil spezifischen Informationen und den Betrieb des Verschleißteils betreffenden Informationen und/oder die auf der Speichereinheit gespeicherten Daten können wenigstens teilweise verschlüsselt vorliegen. Beispiele für entsprechende gespeicherte Daten sind der bereits genannte Typ beziehungsweise die Bauart des Verschleißteils und dessen bereits vollendete Betriebszeit, sowie ferner eine Typennummer zur eindeutigen Identifikation des entsprechenden Verschleißteils oder gegebenenfalls auch teilespezifische Informationen, wie beispielsweise ein Produktionsdatum, eine Seriennummer oder ein Link zu einem Datenblatt. Wie bereits angedeutet, können von der Steuereinheit diese Informationen mittels der Kommunikationseinheit ausgelesen werden und ausgewählte Eigenschaften können von der Steuereinheit in gleicher Weise beschrieben oder überschrieben werden.

Dementsprechend besteht durch das erfindungsgemäße System neben einem Unterbinden eines Einsatzes nicht geeigneter Typen von Verschleißteilen ferner die Möglichkeit, die erneute Verwendung von bereits benutzten Verschleißteilen auszuschließen, die ihre vorgesehene Lebensdauer erreicht haben, und beispielsweise auch Prognosen zu deren Restlaufzeit bei aktuellen Betriebsbedingungen anzustellen. Hierdurch wird wiederum das Anbieten proaktiver Dienstleistungen, beispielsweise einer Ersatzteillieferung, über die ebenfalls bereits angesprochene Online-Anbindung ermöglicht.

Um ferner im konkreten Fall von Trockner- oder Filterpatronen eine Verwendung falscher Patronen, wie zum Beispiel Industrieluft-Patronen bei Atemluftanlagen, auszuschließen, kann auf der Speichereinheit in der bereits angedeuteten Weise eine eindeutige Kennung der Patrone hinterlegt sein und die Steuereinheit kann über Daten hinsichtlich zugelassener Patronen verfügen, beispielsweise in der Form von bei ihr hinterlegten Tabellen. Als weitere Sicherheitsmaßnahme kann die Speichereinheit eine offene und eine verschlüsselte Sektion umfassen, wobei sämtliche Informationen doppelt abgelegt und durch die Steuereinheit auf Plausibilität geprüft werden können. Ferner ist, wie weiter unten noch ausführlicher diskutiert werden wird, denkbar, bei einer ersten Benutzung eines Verschleißteils in einer entsprechenden Anlage ein Matching durchzuführen und Anlageninformationen, beispielsweise ebenfalls eine Seriennummer und/oder Typenbezeichnung, auf die Speichereinheit des Verschleißteils zu schreiben, wonach das Verschleißteil an keiner anderen Anlage mehr einsetzbar ist.

Weiterhin ist denkbar, dass ein Benutzer einer entsprechenden Anlage mit Hilfe der Steuereinheit des erfindungsgemäßen Systems in Echtzeit Daten zu den Verschleißteilen auslesen kann, beispielsweise verbleibende Standzeiten beziehungsweise ein Materialbedarf, wobei hierzu je nach verfügbaren Konnektivitätsoptionen an der Anlage ein mobiles Endgerät vor Ort oder eine Fernauslesung denkbar sind. Weiterhin ist denkbar, bei mobilen Anlagen durch Vorsehen eines GPS-Moduls in der Steuereinheit ferner den Anlagenstandort abzufragen, zu übermitteln und/oder auf die Speichereinheit zu schreiben.

In einer konkreten Hardwareausführung kann das System ferner einen Deckel des Druckbehälters umfassen, wobei die Signaldurchführung in den Deckel integriert ist, welcher vorzugsweise auf den Druckbehälter aufschraubbar ist. Auf diese Weise wird eine vereinfachte Integration des erfindungsgemäßen Systems mit dem Druckbehälter ermöglicht, sodass weitgehend auf bereits bekannte Komponenten zurückgegriffen werden kann, um bei der Herstellung des Druckbehälters keine unnötigen Kosten zu erzeugen.

Insbesondere kann in einer derartigen Ausführungsform ein erster Pol der Signaldurchführung durch einen elektrisch isolierten Stift gebildet sein und ein zweiter, entgegengesetzter Pol durch den Deckel oder eine Verschraubung, was eine einfache und dennoch widerstandsfähige Ausgestaltung der Signaldurchführung angesichts der erheblichen innerhalb des Druckbehälters zu erwartenden Drücke ermöglicht.

In diesem Zusammenhang kann der angesprochene Deckel oder die Verschraubung ferner mit einem kegeligen Absatz versehen sein, welcher bei einer Druckerhöhung innerhalb des Druckbehälters eine Abdichtung davon bewirkt und/oder der Deckel kann an seiner Außenseite und/oder Innenseite mit einem Stecker zur Verbindung mit einem Kabel zu der Steuereinheit versehen sein, um auch an dieser Stelle beispielsweise durch eine Lösbarkeit des Kabels eine erhöhte Modularität und Flexibilität des erfindungsgemäßen Systems zu ermöglichen.

Wie bereits weiter oben angedeutet, betrifft die vorliegende Erfindung ferner eine Anlage zur Verarbeitung eines unter Druck stehenden Gases, insbesondere umfassend eine Gas-Trocknungs- und/oder Filtereinheit, umfassend ein erfindungsgemäßes System der eben beschriebenen Art sowie ein Verschleißteil, welches betriebsmäßig an der Verarbeitung des Gases beteiligt ist. Eine konkrete derartige Anlage kann beispielsweise eine Aufbereitungsanlage für abzufüllende Atem luft sein, in welcher einem Kompressor nachgeschaltet eine entsprechende Patrone in einem Druckbehälter vorgesehen ist, um die vorgegebene Qualität der abzufüllenden Atem luft sicherstellen zu können.

Hierbei kann die erfindungsgemäße Anlage ferner eine zentrale Steuereinheit umfassen, welche mit der Steuereinheit des erfindungsgemäßen Systems betriebsmäßig gekoppelt oder integriert ist und insbesondere zu einer Zeitnahme einer Betriebsdauer des Verschleißteils eingerichtet ist. Somit kann an dieser Stelle die Standzeit des Verschleißteils engmaschig überwacht werden und sichergestellt werden, dass dieses nicht über seine vorgesehene Lebensdauer hinaus zum Einsatz kommt.

Insbesondere kann die Anlage ferner dazu eingerichtet sein, bei Erreichen einer maximal zulässigen Betriebszeit des Verschleißteils wenigstens eine vorbestimmte Maßnahme einzuleiten, insbesondere ein Stilllegen der Anlage oder auch lediglich ein Benachrichtigen eines Bedieners der Anlage über eine geeignete Mensch-Maschine-Schnittstelle.

Gemäß einem weiteren Aspekt betrifft die vorliegende Erfindung ein Verfahren zum Betreiben eines erfindungsgemäßen Systems der oben beschriebenen Art, gegebenenfalls in einer erfindungsgemäßen Anlage wie eben beschreiben, umfassend bei einer Inbetriebnahme des Systems, ein Vergleichen von auf der Speichereinheit hinterlegten Daten mit wenigstens einer vorbestimmten Bedingung und lediglich bei Erfüllen der Bedingung, Freigeben eines Betriebs des Verschleißteils und/oder im laufenden Betrieb des Systems, Schreiben von Informationen betreffend den Betrieb des Verschleißteils auf die Speichereinheit.

Durch dieses Verfahren kann in der oben bereits erläuterten Weise zum einen sichergestellt werden, dass lediglich zulässige Typen von Verschleißteilen in einer übergeordneten Anlage zum Einsatz kommen und andererseits der Betrieb des Verschleißteils und damit der übergeordneten Anlage daran geknüpft werden, dass eine zulässige maximale Betriebszeit des Verschleißteils noch nicht erreicht worden ist.

Demzufolge kann die vorbestimmte Bedingung ein Bautyp, eine frühere Verwendung und/oder eine Manipulation des Verschleißteils betreffen und/oder das Freigeben des Betriebs des Verschleißteils kann einer Inbetriebnahme der Anlage entsprechen.

Weitere Merkmale und Vorteile der vorliegenden Erfindung werden aus der nachfolgenden Beschreibung einer Ausführungsform davon noch deutlicher, wenn diese zusammen mit den beigefügten Figuren betrachtet wird. Diese zeigen im Einzelnen:
Figur 1 eine schematische Darstellung eines erfindungsgemäßen Systems zur Überwachung von Verschleißteilen in einem Druckbehälter;
Figur 2 eine Schnittansicht der Signaldurchführung des Systems aus Figur 1 ;
Figur 3 eine Darstellung der Signaldurchführung aus Figur 2 in einer in einem Druckbehälter montierten Konfiguration; und
Figur 4 ein Flussdiagramm eins erfindungsgemäßen Verfahrens zum Betreiben des erfindungsgemäßen Systems.

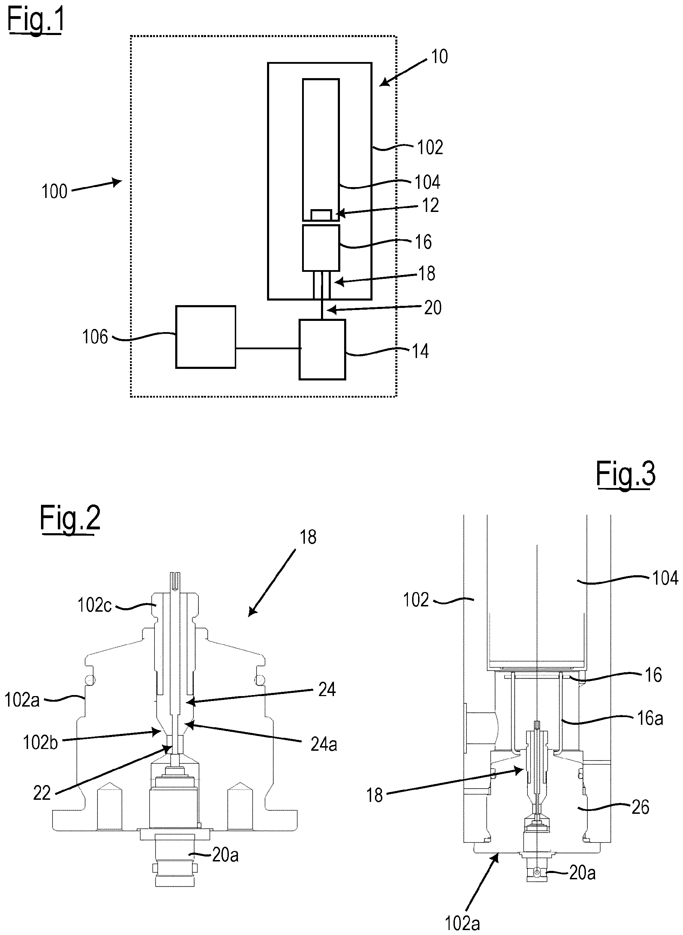

In Figur 1 ist zunächst einmal ein erfindungsgemäßes System zur Überwachung von Verschleißteilen in einem Druckbehälter schematisch gezeigt, das ganz allgemein mit dem Bezugszeichen 10 bezeichnet ist. Hierbei bildet das System 10 einen Teil einer übergeordneten erfindungsgemäßen Anlage 100, von welcher zusätzliche Komponenten ebenfalls schematisch dargestellt sind, wobei der einen Teil der Anlage 100 bildende, bereits angesprochene Druckbehälter mit dem Bezugszeichen 102 versehen ist.

Das im hier gezeigten Fall zu überwachende Verschleißteil ist eine in dem Druckbehälter 102 aufgenommene und hinsichtlich ihrer Wirkung und Funktionsweise an sich bekannte Trockner- oder Filterpatrone 104, welche sowohl als Teil des Systems 10 als auch als Teil der Anlage 100 aufgefasst werden kann. Hierbei sei darauf hingewiesen, dass eine derartige Patrone 104 für eine gewisse Betriebszeit ausgelegt ist, wonach sie erschöpft ist und getauscht werden muss, um die korrekte Funktionsweise der Anlage 100 sicherstellen zu können. Ferner sei darauf hingewiesen, dass wenngleich im Folgenden beispielhaft durchgehend von der Patrone 104 gesprochen werden wird, so jedoch auch andere Typen von Verschleißteilen mit dem System 10 überwacht werden könnten.

Zu diesem Zweck ist der Patrone 104 an ihrem in Figur 1 unteren Ende eine Speichereinheit 12 in Form eines auslesbaren und beschreibbaren RFID-Tags zugeordnet, auf welchem verschiedene Daten hinterlegt werden können, welche der Patrone zugeordnet sind und unter anderem ihren Bautyp, ihr Herstellungsdatum, ihr erstes Inbetriebnahmedatum und ihre bereits verstrichene Betriebszeit, etc. umfassen können. Hierbei kann eine geeignete Kodierung der entsprechenden Daten verwendet werden, welche ggf. aus Sicherheitsgründen ferner eine Verschlüsselung umfassen kann.

Weiterhin umfasst das System 10 eine außerhalb des Druckbehälters angeordnete Steuereinheit 14, welche dazu eingerichtet ist, Daten von der Speichereinheit 12 wenigstens auszulesen und vorzugsweise ebenfalls darauf zu schreiben. Hierbei kann die Steuereinheit 14 des Systems 10 mit einer zentralen Steuereinheit 106 betriebsmäßig gekoppelt oder integral mit ihr ausgeführt sein, d.h. dass in einem solchen Fall die Funktionalitäten der Steuereinheit 14 bereits von der zentralen Steuereinheit 106 übernommen werden würden.

Um nun das Auslesen und ggf. das Schreiben von Daten auf der Speichereinheit 12 zu ermöglichen, ist ferner innerhalb des Druckbehälters 102 eine Kommunikationseinheit 16 angeordnet, welche im hier gezeigten Fall durch eine RFID-Antenne in Form von Leiterbahnen auf einer entsprechenden Platine gebildet ist. Eine derartige Ausgestaltung ist für die innerhalb des Druckbehälters 102 herrschenden Verhältnisse besonders geeignet, es sind jedoch auch alternative Varianten mit anderen kabellosen oder kabelgebunden Kommunikationsformen zwischen entsprechenden Paaren von Speichereinheiten 12 und Kommunikationseinheiten 16 denkbar.

Zur Herstellung einer Verbindung zwischen der Steuereinheit 14 und der Kommunikationseinheit 16 umfasst das System 10 ferner eine druckfeste Signaldurchführung 18, welche im Folgenden anhand der Figuren 2 und 3 beschrieben werden wird, sowie ein geschirmtes Kabel 20, welches mittels entsprechender Steckerverbindungen, beispielsweise einen in Figur 3 gezeigten BNC/SMC-Stecker 20a, jeweils an der Steuereinheit 14 und der Signaldurchführung 18 angeschlossen ist. Indem die Steuereinheit 14 außerhalb des Druckbehälters 102 und die Speichereinheit 12 sowie die Kommunikationseinheit 16 innerhalb des Druckbehälters 102 angeordnet sind, wird erreicht, dass lediglich die letzteren beiden dem Innendruck, den Einflüssen durch verschiedene Gase und Flüssigkeiten mit der damit zusammenhängenden Korrosion und ggf. Ablagerungen, etc. sowie veränderlichen Betriebs- oder Lagertemperaturen ausgesetzt sind, wobei insbesondere durch den Einsatz von RFID-Technologie entsprechend widerstandfähige Komponenten verwendet werden können.

Unter Bezugnahme auf die Figuren 2 und 3 soll nun die Signaldurchführung 18 des Systems 10 aus Figur 1 näher erläutert werden. Hierbei ist die Signaldurchführung 18 in einen Deckel 102a des Druckbehälters 102 integriert, welcher auf den Druckbehälter aufschraubbar ist, wobei durch ein entsprechendes Abschrauben auch Zugang zu der Patrone 104 erlangt werden könnte, um diese austauschen zu können.

In der hier gezeigten Ausführungsform der Signaldurchführung 18 ist ein erster Pol davon durch einen elektrisch isolierten Stift 22 gebildet, während der zweite, entgegengesetzte Pol, hier der Minuspol, durch den bereits erwähnten Deckel 102a des Druckbehälters 102 gebildet ist. In unterschiedlichen Varianten der hier gezeigten Signaldurchführung 18 kann die Kommunikationseinheit 16 direkt mit dem Deckel 102a gekoppelt sein, oder über eine Halterung, über eine Fixierschraube/Mutter 102c mit dem Deckel 102a verbunden sein. Anstelle eines Drahtes könnte die Minuspol-Verbindung ggf. auch als hier dargestelltes Blech 16a ausgeführt sein, welches gleichzeitig als Halterung der Kommunikationseinheit 16 dienen könnte.

Ein Isolator 24 trägt hierbei den Stift 22 und isoliert diesen gegen den Druckbehälter 102 bzw. dessen Deckel 102a. Hierbei kann für den Isolator 24 beispielsweise auf einen Kunststoff zurückgegriffen werden, welcher eine ausreichende Druckfestigkeit aufweist, welche auf den maximalen Arbeitsdruck des Druckbehälters 102 abgestimmt ist. Da die Wandstärken des Druckbehälters 102 sowie seines Deckels 102a bei hochfrequenten Kommunikationssignalen die Abstimmung innerhalb des Elektronikkreises ebenso wie eine mögliche Beschichtung der Platine der Kommunikationseinheit 16 zu deren Schutz vor schädlichen Einflüssen innerhalb des Druckbehälters 102 beeinflussen können, ist die Steuereinheit 14 ferner dazu eingerichtet, die entsprechenden Einflüsse geeignet zu kompensieren.

Der Isolator 24 selbst ist in dem Deckel 102a integriert, welcher beispielsweise aus Stahl oder Aluminium gebildet sein kann und in den Druckbehälter 102 mittels eines entsprechenden, in Figur 3 angedeuteten Gewindes 26 auf- oder eingeschraubt werden kann. Die Art und die Abmessungen des Gewindes 26 sind hierbei ebenfalls auf die vorgesehenen Betriebsbedingungen des Druckbehälters 102 abzustimmen, wobei auf Erfahrungen hinsichtlich Standard-Schraubverbindungen für Druckgeräte zurückgegriffen werden kann, beispielsweise gerade Gewinde mit Dichtung, kegelige Gewinde, NPT-Gewinde, etc.

In der hier gezeigten Variante erfolgt die Druckabdichtung zwischen dem Deckel 102a und dem Isolator 24 über einen kegeligen Ansatz 102b, welcher mit einem entsprechenden kegeligen Gegenstück 24a des Isolators derart zusammenwirkt, dass bei einer Erhöhung des Innendrucks in dem Druckbehälter 102 der Isolator 24 auf den Deckel 102a drückt und somit die Abdichtung bewirkt. Der Isolator 24 mit dem eingesetzten Stift 22 kann hierbei mittels einer Fixierschraube 102c oder - mutter in dem Deckel 102a fixiert sein, so dass alle der genannten Komponenten mit dem Deckel 102a verbunden sind und als eine Baugruppe vorgefertigt, geprüft und gemeinsam auf oder in den Druckbehälter 102 geschraubt werden können.

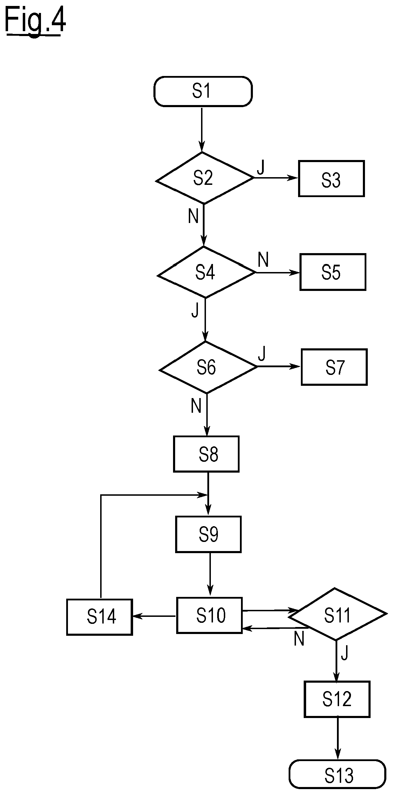

Zuletzt sei unter Bezugnahme auf das Flussdiagramm aus Figur 4 ein Verfahren zum Betreiben eines Systems 10 in einer Anlage 100 wie jeweils in Figur 1 gezeigt erläutert. Hierbei wird in Schritt S1 zunächst einmal eine Patrone 104 in den Druckbehälter 102 eingesetzt und der Deckel 102a ist auf den Druckbehälter aufgeschraubt, so dass die Anlage 100 in prinzipiell betriebsfähigem Zustand ist und von den Steuereinheiten 14 und 106 in koordinierter Weise ein Initialisierungsvorgang in der nachfolgend beschriebenen Art durchgeführt werden kann. In unterschiedlichen Ausführungsformen eines derartigen Systems kann hierbei der Deckel 102a selbst zum Patronenwechsel vorgesehen sein, oder es kann an einer anderen Stelle ein weiterer Zugang mit Deckel bereitgestellt sein, welcher einen einfachen Patronenwechsel ohne Ab- bzw. Anstecken der entsprechenden Kabel erlaubt.

Zunächst einmal wird in Schritt S2 durch Auslesen der Speichereinheit 12 mittels der Steuereinheit 14 eine prinzipielle Plausibilitätsprüfung der dort hinterlegten Daten vorgenommen, beispielsweise um zu überprüfen, ob die Speichereinheit 12 manipuliert worden ist. Ein mögliches Vorgehen hierbei kann einen Vergleich zwischen einem verschlüsselten Teil der Speichereinheit 12 und einem unverschlüsselten Teil davon hinsichtlich Konsistenz umfassen. Wird hierbei eine Abweichung, eine Manipulation oder ähnliches festgestellt ("J" in Schritt S2), so wird das Verfahren unmittelbar bei Schritt S3 beendet und es kann an einer Anzeige oder ähnlichem eine entsprechende Fehlermeldung für einen Bediener ausgegeben werden, dass die eingesetzte Patrone nicht zulässig ist. Wird dem hingegen festgestellt, dass eine derartige Abweichung oder ähnliches nicht vorliegt ("N" in Schritt S2), so geht das Verfahren zu Schritt S4 über.

Anschließend wird bei Schritt S4 anhand der ausgelesenen Daten überprüft, ob der entsprechende Typ der eingesetzten Patrone 104 prinzipiell für den Einsatz in der vorliegenden Anlage 100 zugelassen ist. Dies kann beispielsweise durch ein Nachschlagen des ausgelesenen Patronentyps in einer der Steuereinheit 14 zugänglichen Tabelle geschehen, in welcher sämtliche zulässige Patronentypen hinterlegt sind. Wird hierbei festgestellt, dass der entsprechende Patronentyp nicht zugelassen ist ("N" in Schritt S4), so endet das Verfahren bei Schritt S5 unter Ausgabe einer entsprechenden Nachricht in ähnlicher Weise wie oben für Schritt S3 beschrieben.

Wird dem hingegen in Schritt S4 festgestellt, dass der Patronentyp zulässig ist ("J" in Schritt S4), so wird anschließend in Schritt S6 überprüft, ob die Patrone 104 bereits in einer anderen Anlage verwendet worden ist, was im hier diskutierten Fall nicht erlaubt sein soll. Entsprechende Daten wären durch die genannte andere Anlage zu Betriebsbeginn auf die Speichereinheit 12 geschrieben worden, wie weiter unten unter Bezugnahme auf Schritt S8 noch erläutert werden wird. Dementsprechend endet im Fall, dass eine derartige frühere Verwendung dokumentiert worden ist ("J" in Schritt S6) das Verfahren in Schritt S7 mit Ausgabe der Benachrichtigung, dass eine neue Patrone einzusetzen ist. Ergänzend könnte in Schritt S6 in gleicher Weise ebenfalls überprüft werden, ob die hier eingesetzte Patrone 104 ihre maximale Betriebszeit bei früherer Verwendung in derselben Anlage bereits erreicht hat, beispielsweise wenn die Inbetriebnahme der Anlage 100 nach einer Stillstandzeit erfolgt, in welcher die Patrone 104 nicht unbedingt getauscht worden ist.

Wird jedoch in Schritt S6 festgestellt, dass die Patrone 104 weder zuvor in einer anderen Anlage verwendet worden ist, noch dass ihre maximale Betriebsdauer bereits erreicht worden ist ("N" in Schritt S6), so geht das Verfahren zu Schritt S8 über, in welchem die Patrone 104 zu der Anlage 100 gematcht wird, d.h. auf die Speichereinheit 12 entsprechende Daten geschrieben werden, welche anzeigen, dass die Patrone 104 in der konkreten Anlage 100 eingesetzt worden ist. Sind aufgrund einer früheren Verwendung dieser Patrone 104 in der Anlage 100 bereits entsprechende Daten auf der Speichereinheit 12 hinterlegt, so kann der Schritt S8 übersprungen werden.

Hiernach wird in Schritt S9 die Anlage manuell in Betrieb genommen oder eine automatische Aktion durch die Steuerung durchgeführt und in Schritt S10 im laufenden Betrieb durch wenigstens eine der Steuereinheiten 14 und 106 die Betriebszeit der Patrone 104 laufend aufgezeichnet. Hierbei wird während des Betriebs der Anlage 100 in Schritt S10 beispielsweise periodisch überwacht, ob die Patrone 104 ihre zulässige maximale Betriebszeit erreicht hat (Schritt S11). Ist dies nicht der Fall ("N" in Schritt S11), so wird der Betrieb im Rahmen von Schritt S10 weitergeführt, wobei ebenfalls periodisch die bereits geleistete Betriebsdauer der Patrone 104 auf die Speichereinheit 12 geschrieben werden kann, um den Lebenszyklus davon zu dokumentieren, und/oder die verbleibende Restlaufzeit der Patrone 104 im Rahmen der aktuellen Betriebsbedingungen für einen Bediener angezeigt werden kann.

Dem hingegen wird bei einem Feststellen ("J" in Schritt S 11), dass die Patrone 104 ihre maximale Betriebszeit erreicht hat, zu Schritt S12 übergegangen, in welchem durch die zentrale Steuereinheit 106 der Betrieb der Anlage beendet und eine entsprechende Nachricht für einen Bediener ausgegeben wird, dass eine neue Patrone 104 einzusetzen ist, bevor der Betrieb wieder aufgenommen werden kann. Ein derartiger Tausch von Patronen 104 kann dann in Schritt S13 erfolgen, woraufhin das Verfahren bei Schritt S1 neu beginnen kann.

Wird dem hingegen in Schritt S10 der Betrieb der Anlage 100 zeitweilig gestoppt, ohne dass eine vollständige neue Inbetriebnahme bei Schritt S1 notwendig wird, beispielsweise aufgrund eines manuellen Eingriffs durch einen Bediener oder eine automatisch ausgeführte Aktion der Anlage 100, so kann zu Schritt S14 übergegangen werden, in welchem die bereits geleistete Betriebsdauer der Patrone 104 auf die Speichereinheit 12 geschrieben werden kann, falls die Anlage 100 doch vollständig neu in Betrieb genommen werden muss, bzw. von welchem aus bei einer Wiederaufnahme des Betriebs der Anlage zu Schritt S9 übergegangen werden kann.

## Patentansprüche

1. System (10) zur Überwachung von Verschleißteilen (104) in einem Druckbehälter (102), umfassend:
- eine einem Verschleißteil (104) zuordenbare Speichereinheit (12);
- eine außerhalb des Druckbehälters (102) angeordnete Steuereinheit (14), welche dazu eingerichtet ist, Daten von der Speichereinheit (12) auszulesen und ggf. Daten auf die Speichereinheit (12) zu schreiben;
- eine innerhalb des Druckbehälters (102) angeordnete Kommunikationseinheit (16), welche dazu eingerichtet ist, eine Kommunikationsverbindung mit der Speichereinheit (12) herzustellen; und
- eine druckfeste Signaldurchführung (18), welche dazu eingerichtet ist, eine Signalverbindung zwischen der Steuereinheit (14) und der Kommunikationseinheit (16) durch den Druckbehälter (102) hindurch herzustellen.

2. System (10) nach Anspruch 1,
wobei die Speichereinheit (12) ein RFID-Tag ist und die Kommunikationseinheit (18) eine RFID-Antenne, insbesondere eine RFID-HF-Antenne, vorzugsweise gebildet durch Leiterbahnen auf einer Platine.

3. System (10) nach einem der vorhergehenden Ansprüche,
wobei die Steuereinheit (14) mit einer zentralen Steuereinheit (106) einer übergeordneten Anlage (100) betriebsmäßig gekoppelt oder integriert ist.

4. System (10) nach einem der vorhergehenden Ansprüche,
ferner umfassend eine als das Verschleißteil (104) wirkende Patrone, insbesondere Trockner- oder Filterpatrone, welche dazu vorgesehen ist, in ihrem Betrieb in dem Druckbehälter (102) aufgenommen zu sein.

5. System (10) nach einem der vorhergehenden Ansprüche,
wobei die auf der Speichereinheit (12) gespeicherten Daten wenigstens eines umfassen aus für das Verschließteil (104) spezifischen Informationen und den Betrieb des Verschleißteils (104) betreffenden Informationen, und/oder
wobei die auf der Speichereinheit (12) gespeicherten Daten wenigstens teilweise verschlüsselt vorliegen.

6. System (10) nach einem der vorhergehenden Ansprüche,
ferner umfassend einen Deckel (102a) des Druckbehälters (102), wobei die Signaldurchführung (18) in den Deckel (102a) integriert ist, welcher vorzugsweise auf den Druckbehälter (102) ein- oder aufschraubbar ist.

7. System (10) nach dem vorhergehenden Anspruch,
wobei ein erster Pol der Signaldurchführung (18) durch einen elektrisch isolierten Stift (22) gebildet ist und ein zweiter, entgegengesetzter Pol durch den Deckel (102a) gebildet ist.

8. System (10) nach einem der Ansprüche 6 und 7,
wobei der Deckel (102a) mit einem kegeligen Absatz (102b) versehen ist, welcher bei einer Druckerhöhung innerhalb des Druckbehälters (102) eine Abdichtung davon bewirkt.

9. System (10) nach einem der Ansprüche 6 bis 8,
wobei der Deckel (102a) an seiner Außenseite mit einem Stecker (20a) zur Verbindung mit einem Kabel (20) zu der Steuereinheit (14) versehen ist.

10. Anlage (100) zur Verarbeitung eines unter Druck stehenden Gases, insbesondere umfassend eine Gas-Trocknungs- und/oder Filtereinheit, umfassend wenigstens ein System (10) nach einem der vorhergehenden Ansprüche und ein Verschließteil (104), welches betriebsmäßig an der Verarbeitung des Gases beteiligt ist.

11. Anlage (100) nach dem vorhergehenden Anspruch,
ferner umfassend eine zentrale Steuereinheit (106), welche mit der Steuereinheit (14) des Systems (10) betriebsmäßig gekoppelt oder integriert ist und insbesondere zu einer Zeitnahme einer Betriebsdauer des Verschleißteils (104) eingerichtet ist.

12. Anlage (10) nach einem der Ansprüche 10 und 11, welche ferner dazu eingerichtet ist, bei Erreichen einer maximal zulässigen Betriebszeit des Verschleißteils (104) wenigstens eine vorbestimmte Maßnahme einzuleiten, insbesondere ein Stilllegen der Anlage und/oder ein Benachrichtigen eines Bedieners.

13. Verfahren zum Betreiben eines Systems (10) nach einem der Ansprüche 1 bis 9, ggf. in einer Anlage (100) nach einem der Ansprüche 10 bis 12, umfassend:
- bei einer Inbetriebnahme des Systems (10), Vergleichen von auf der Speichereinheit (12) hinterlegten Daten mit wenigstens einer vorbestimmten Bedingung und lediglich bei Erfüllen der Bedingung, Freigeben eines Betriebs des Verschleißteils; und/oder
- im laufenden Betrieb des Systems (10), Schreiben von Informationen betreffend den Betrieb des Verschleißteils (104) auf die Speichereinheit (12).

14. Verfahren nach dem vorhergehenden Anspruch,
wobei die vorbestimmte Bedingung einen Bautypen, eine frühere Verwendung und/oder eine Manipulation des Verschleißteils betrifft.

15. Verfahren nach einem der Ansprüche 13 und 14, welches in einer Anlage (100) nach einem der Ansprüche 10 bis 12 durchgeführt wird, wobei das Freigeben des Betriebs des Verschleißteils (104) einer Freigabe zur Inbetriebnahme der Anlage entspricht.
